# EUROPEAN PATENT SPECIFICATION

(11) **EP 4 109 736 B1**
(45) Date of publication and mention of the grant of the patent: **11.11.2026**
(21) Application number: 21181226.8
(22) Date of filing: 23.06.2021
(51) Int. Cl.: H02P 9/00, G05B 13/02, F03D 7/02, F03D 7/04

(54) **METHOD OF OPERATING A WIND TURBINE WITH OPTIMISED PARAMETERS AND WIND TURBINE COMPRISING THE SAME**
VERFAHREN ZUM BETRIEB EINER WINDTURBINE MIT OPTIMIERTEN PARAMETERN UND WINDTURBINE DAMIT
PROCÉDÉ DE FONCTIONNEMENT D'UNE ÉOLIENNE À PARAMÈTRES OPTIMISÉS ET ÉOLIENNE L'UTILISANT

(43) Date of publication of application: 28.12.2022
(73) Proprietor: Wobben Properties GmbH, 26607 Aurich (DE)
(72) Inventor: NOFFKE, Nils, 26607 Aurich (DE); SCHLOTE, Daniel, 68519 Viernheim (DE); LAGERWEIJ, Ewout, 7322 JB Apeldoorn (NL)
(74) Representative: Eisenführ Speiser

(56) References cited:
- US-A1- 2019 154 000
- US-B2- 9 263 980
- YAHIA HEDI ET AL: "Differential evolution method-based output power optimisation of switched reluctance generator for wind turbine applications", IET RENEWABLE POWER GENERATION, THE INSTITUTION OF ENGINEERING AND TECHNOLOGY, MICHAEL FARADAY HOUSE, SIX HILLS WAY, STEVENAGE, HERTS. SG1 2AY, UK, vol. 8, no. 7, 1 September 2014 (2014-09-01), pages 795 - 806, XP006049600, ISSN: 1752-1416, DOI: 10.1049/IET-RPG.2013.0179

## Description

The present invention refers to a method for controlling a wind turbine as well as such a wind turbine.

In order to generate electrical power wind turbines comprise an electric generator, which is usually controlled via a converter, e.g. a back-to-back converter, connecting said electric generator with an electrical grid in order to provide the electrical power produced by said electric generator to said electrical grid.

Due to physical reasons, only certain step sizes for physical quantities like amplitude or phase angle are allowable for controlling said converter or said generator.

For example, large step sizes of phase angle or amplitude at higher currents may lead to big instantaneous current spikes destroying said converter or said generator.

In view of the above, an enhanced method for controlling an electric generator of a wind turbine is sought, in particular a method, which is independent of the topology of the generator and/or the converter of said wind turbine.

US 9,263,980 B2 relates to a method for controlling the operation of an electromechanical transducer, in particular an electrical generator of a wind turbine.

US 2019/0154000 A1 describes a control of wind turbines where a noise measure is taken into account.

WO 2019/178146 A1 describes an approach to optimizing the performance of a switched reluctance generator (SRG) intended for variable-speed, direct drive wind turbines.

According to a first aspect of the invention, a method for controlling a wind turbine is proposed, in particular for an electric generator of said wind turbine. Said method comprising an optimization, in particular a mathematical optimization, during which a suitable operating parameter for controlling said wind turbine, in particular said electrical generator of said wind turbine, is determined, in particular in an iterative manner. Said optimization comprises the steps of: providing a multidimensional space comprising a plurality of parameters; providing an objective function for said multidimensional space, e.g. a simplex has a shape of a triangle or a tretrahedron; and determining one parameter of said multidimensional space as a suitable operating parameter by applying said objective function to said multidimensional space, in particular in an iterative manner. Said method for controlling further comprising the steps of: selecting a suitable operating parameter as an operating parameter for said wind turbine, in particular said electric generator of said wind turbine; and operating said wind turbine, in particular said electric generator of said wind turbine, based on said operating parameter, in particular by controlling a converter connected to said generator.

Thus, a method for controlling a wind turbine is proposed using an optimization in order to determine suitable operating parameters for a wind turbine, in particular the electric generator of a wind turbine.

The result of said optimization is a suitable operating parameter, which may be selected as an operating parameter of said wind turbine in order to operate said wind turbine.

Preferably, said operating parameter is for controlling said electric generator of said wind turbine, e.g. an amplitude or a phase angle of said electric generator via back-to-back converter connected to said electric generator. For example, said operating parameters are used to control an active rectifier which is part of a back-to-back converter connected to said electric generator.

Said optimization is based on a multidimensional space comprising a plurality of parameters and an objective function, e.g. a simplex. Thus, said optimization is based on a multidimensional space and an objective function.

In order to determine one parameter of said multidimensional space as a suitable operating parameter said objective function is applied to said multidimensional space, in particular in an iterative manner, e.g. by using a Nelder-Mead method. For example, said objective function is applied to said multidimensional space in an iterative manner finding a minimum in said multidimensional space, e.g. a noise minimum of said electric generator.

According to the invention, a combination of multiple parameters is determined as phase angle and amplitude.

For this, said multidimensional space comprises at least two dimensions. Preferably, the number of dimensions is chosen based on the quantity of the operating parameters to be optimized. For example, a two-dimensional space is chosen in order to optimize a pair of parameters, e.g. amplitude and phase angle.

In one embodiment, only one optimization is run at a time.

In another embodiment, several optimizations are run parallel at a time for different parameters, e.g. one optimization for amplitude and phase angle and one optimization for rotor speed and pitch angle.

In addition or alternatively, said objective function is chosen based on the parameters to be optimized.

Preferably, said objective function is a simplex in shape of a triangle, in particular in case of a two-dimensional space, or a tetrahedron, in particular in case of a three-dimensional space. Moreover, said shape may also be chosen based on the parameters to be optimized.

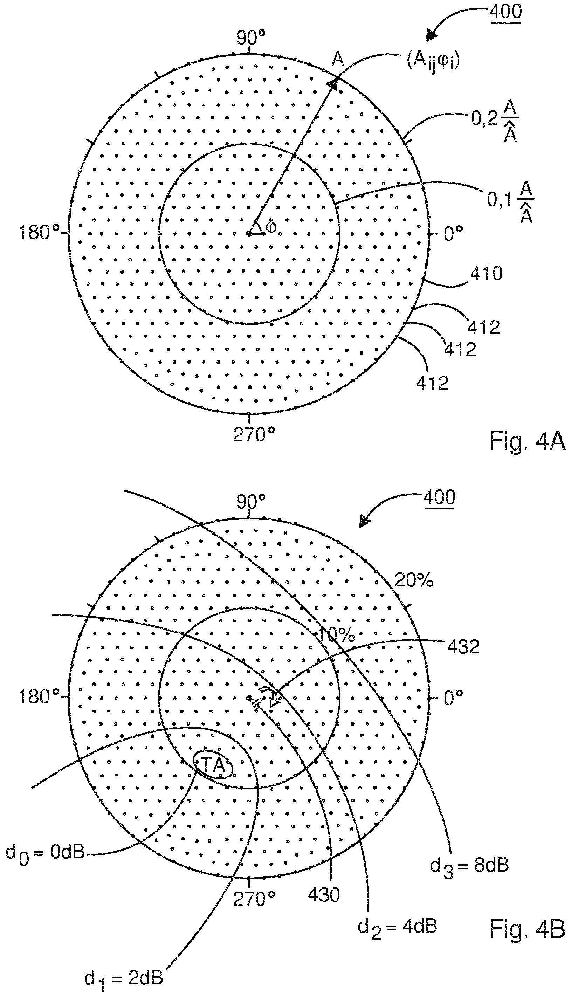

For example, an optimization for two parameters, e.g. amplitude and phase angle, is sought and therefore, a two-dimensional space is chosen. Due to the fact, that the amplitude and phase angle may be expressed as a vector, a polar coordinate system may be chosen. Thus, a polar coordinate system is chosen as a multidimensional space, in particular as shown in Fig. 4A. Thus, the multidimensional space is a two-dimensional polar coordinate system having multiple discrete points forming a grid of circular shape with approximately equal sized triangular cells and each point comprising a coordinate for the amplitude and a coordinate for the phase angle. Said objective function in shape of a triangle is then applied to said system to find a suitable parameter, in particular as described above or below.

Preferably, the method provided herein is used for higher harmonics of generator currents, in particular in addition to the normal current controller, preferably for a superimposed control.

In a preferred embodiment, said optimization is running while said generator is rotating and/or generating electrical power.

Thus, said optimization is run during operation of said wind turbine, preferably in an iterative manner.

In particular, the proposed method is preferably run part time or full time during operation of said wind turbine, e.g. in a closed loop or feedback loop control. Preferably, also using a look-up table.

In a preferred embodiment, said optimization is a mathematical and/or numerical optimization.

Thus, said optimization is based on a mathematical or numerical algorithm, e.g. for the problem of linear optimization.

One example for this is the so-called Nelder-Mead method, a numerical method used to find a minimum or a maximum of an objective function in a multidimensional space. However, also other algorithms may be used, e.g. another simplex algorithm.

In a preferred embodiment, said multidimensional space is provided as a grid, in particular a circular grid, preferably having equal sized cells, e.g. of triangular shape.

In particular, said multidimensional space has a plurality of discrete points and said points are forming a grid.

Said grid is preferably of circular shape and/or with approximately equal sized triangular cells. One example for this is shown in Fig. 4A.

Preferably, each point of said grid comprises a multidimensional coordinates, e.g. two coordinates, for example amplitude and phase angle. In addition, the form of grid depends on the character of the coordinates, e.g. amplitude and phase angle leading to a circular shape or power and rotation speed leading to a rectangular or trapezoidal shape.

In a more preferred embodiment, said grid comprises an area of unsetable parameters, which in particular are declared as forbidden area so that the objective function is not allowed and/or able to settle with said area.

By using said forbidden area, a plurality of parameters may be dismissed on purpose whenever needed.

For example, if specific parameters lead to noise due to the prevailing wind, said specific parameters may be declared as forbidden. Thus, those specific parameters cannot be determined as suitable operating parameters.

In an even more preferred embodiment, said grid comprises a mesh topology depending on the operating parameter. For example, said mesh topology may be of triangles or squares or other shapes, in the same or other size(s).

In some cases, a mesh of triangles may be advantageous. In other cases, other shapes may be advantageous.

In a preferred embodiment, said objective function is a simplex and has preferably the shape of a triangle.

In a preferred embodiment, said determining is carried out by a direct search method, in particular an Nelder-Mead method.

In a preferred embodiment, said operating parameter is a minimum or maximum of said objective function.

In a preferred embodiment, said optimization comprises at least a first and a second mode, each having a different count for points to be measured.

In a preferred embodiment, a reference for the optimization is also measured, e.g. a base line, and the result of said optimization is compared to said reference in order to quantify said optimization. The result of this comparison may then be used for further optimization, e.g. other wind turbine parameters like power output.The lower said count, the faster the algorithm of the optimization.

For example, the objective function has the shape of a triangle and therefore comprises three points. In this case, the first mode may have a count of one and the second mode may have a count of three and therefore, in the first mode only one point is newly measured every time whereas in the second mode all three points are newly measured every time. In this case, the first mode is much faster than the second mode and therefore, the first mode may be called fast mode and the second mode may be called slow mode. According to the invention, said optimization comprises at least a first and a second mode, and the optimization further comprises the step: choosing the first or the second mode depending on power ramp.

Accordingly, said optimization is toggleable between a first mode and second mode, wherein the toggle is performed based on a power ramp of the wind turbine.

For example, the grid operator demand power within the electrical supply grid and sends a request to the wind turbine. Then, the wind turbine may ramp up his power. If this ramp exceeds a predefined power-over-time-factor, the algorithm may switch into another mode, e.g. from a slow mode into a fast mode.

In a preferred embodiment, said suitable operating parameter is not selected as the operating parameter for said wind turbine when said suitable operating parameter would lead to an operating current above a certain threshold.

Therefore, said optimization comprises at least one limit or threshold and/or may not exceed certain values.

For example, if said optimization is used for varying the amplitude and/or the phase angle of a current within said electrical generator, e.g. an operating current of said electric generator, in order to reduce a ripple torque of said generator, a threshold may be set at twenty percent of the base current. Thus, the optimization may only vary the parameters in range of the electric power produced by the electric generator.

In a preferred embodiment, said optimization uses a look-up table to store measure points. According to second aspect of the invention, a wind turbine is proposed comprising an electric generator, which is controlled by a method as described above or below.

Said wind turbine may also comprises a tower and a nacelle.

Preferably, on said nacelle is an aerodynamic rotor having a hub with three rotor blades and a spinner.

During operation, said aerodynamic rotor is set in a rotating motion by the wind and thereby driving a generator in said nacelle.

In a preferred embodiment, said electric generator is a, in particular permanent magnet synchronous, generator with an active rectifier and said active rectifier is designed to control a current of said generator, in particular an amplitude and/or a phase angle of said current.

For example, said generator is connected to an active rectifier, which is connected to an inverter, which is connected to an electrical supply grid.

Said active rectifier and said inverter are preferably arranged as an back-to-back converter.

In a preferred embodiment, said wind turbine further comprises a wind turbine control unit having at least one optimization module, preferably with a look-up table for storing measured points.

In order to control said wind turbine said wind turbine control unit may receive multiple signals, e.g. a measured phase current of said generator, a line voltage between said active rectifier and said inverter and/or a power demand value for controlling the power output of said wind turbine.

In a preferred embodiment, said wind turbine further comprises a sensor placed on a hub of said wind turbine.

Preferably, said sensor is an accelerometer.

In a preferred embodiment, said sensor is designed to detect a vibration or a sound of said wind turbine and/or said electric generator and/or a wind turbine blade.

Thus, a sound of said wind turbine may be used as a predetermined criteria for optimizing the operating parameters of said wind turbine, in particular by a method described above or below.

With reference to the appended drawings, below follow a more detailed description of embodiments of the invention cited as examples.

In the drawings:
- Fig. 1: shows a wind turbine in a preferred embodiment,
- Fig. 2: shows another view of said wind turbine in a preferred embodiment,
- Fig. 3: shows a flowchart of the proposed method,
- Fig. 4A: illustrates a multidimensional space,
- Fig. 4B: illustrates a multidimensional space during optimization,
- Fig. 5: shows a flow chart of the optimization,
- Fig. 6: shows a look-up table.

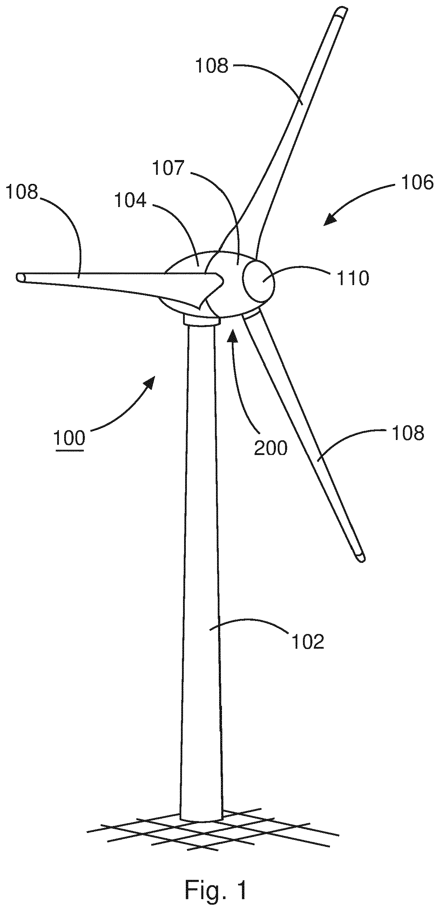

Fig. 1 shows a wind turbine 100 in a preferred embodiment.

Said wind turbine 100 comprises a tower 102 and a nacelle 104. Arranged on said nacelle 104 is an aerodynamic rotor 106 having a hub 107 with three rotor blades 108 and a spinner 110.

During operation, said aerodynamic rotor 106 is set in a rotating motion by the wind and thereby driving a generator in said nacelle 104.

Said generator is preferably a synchronous generator with an active rectifier, designed to control a current of said generator.

Said wind turbine 100 also comprises a sensor 200, in particular an accelerometer, placed in said hub 107, in particular on an inner side of said hub 107 next to a pitch bearing or a stator ring of the generator.

Said sensor 200 is designed for detecting a vibration or a sound of said wind turbine 100 and/or said electric generator and/or a wind turbine blade 108.

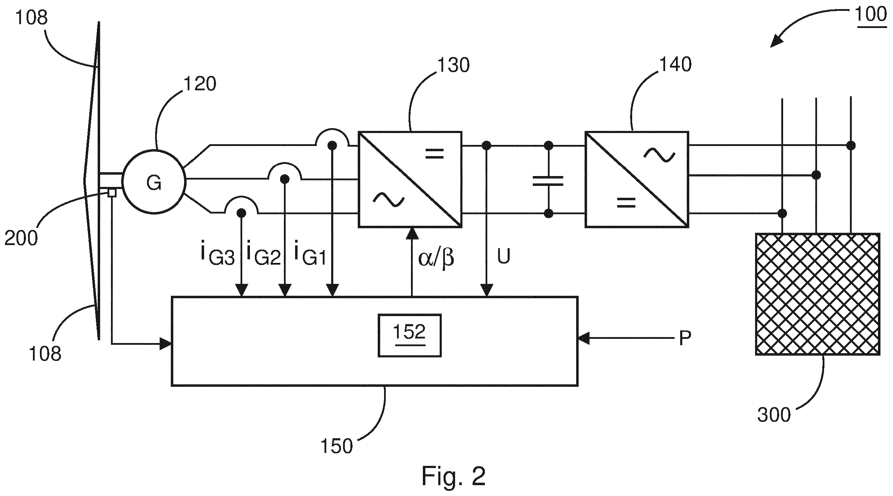

Fig. 2 shows another view of said wind turbine 100, in particular as shown in Fig. 1, in a preferred embodiment.

Said rotor blades 108 are mechanically connected to said generator 120 via said hub 107.

Preferably, said generator 120 is a permanent magnet synchronous generator.

Said generator 120 is connected to an active rectifier 130, which is connected to an inverter 140, which is connected to an electrical supply grid 250.

Said active rectifier 130 and said inverter 140 are preferably arranged as an back-to-back converter.

Said wind turbine 100 also comprises a wind turbine control unit 150, which is designed to control said wind turbine 100, and in particular said active rectifier 130.

In order to control said wind turbine 100 said wind turbine control unit 150 may receive multiple signals, e.g. a measured phase current i_{g1}, i_{g2}, i_{g3} of said generator 120, a line voltage U between said active rectifier 130 and said inverter 140 and/or a power demand value P for controlling the power output of said wind turbine.

Said wind turbine control unit 150 is also designed to control said active rectifier 130 via a signal line in order to meet a specific operating point of said wind turbine or generator.

Moreover, said wind turbine control unit 150 is designed to control said active rectifier 130 using α/β-coordinates, e.g. for a current, in order to meet a specific operating point of said wind turbine and/or generator.

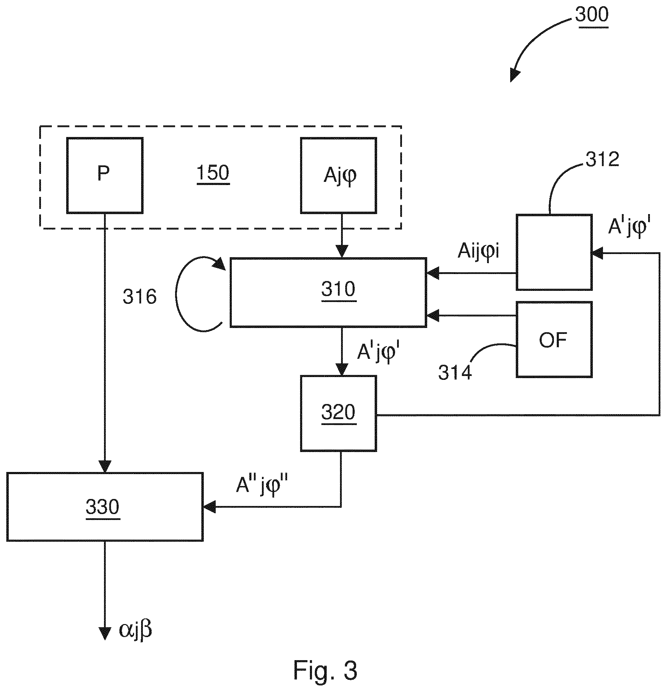

Said wind turbine control unit 150 may also comprise an optimization module 152 designed to run the above or below described optimization, e.g. as shown in Fig. 3.

Fig. 3 shows a flowchart 300 of a method for controlling an electric generator of a wind turbine, e.g. as shown in Fig. 1 and/or Fig. 2, comprising an optimization.

Said electric generator may be controlled via an active rectifier and said active rectifier is controlled via a power demand value P which is transformed into α/β-coordinates, which are used to control said active rectifier. Hence, said electric generator is controlled via a power demand value P using α/β-coordinates in order to drive an active rectifier controlling said electric generator.

In order to operate said generator properly also different operating parameters leading to different operating points are used, e.g. amplitude A and/or phase angle φ, in particular for controlling a generator current.

Any parameters / operating parameters needed for controlling said wind turbine may be provided by a wind turbine control unit 150, as shown in Fig. 2.

During operation of said wind turbine, an optimization 310 as described above or below is carried out.

Said optimization 310 is a mathematical optimization, in particular for operating parameters, e.g. amplitude A and phase angle φ, during which a suitable operating parameter A', φ' for controlling said wind turbine is determined, in particular in an iterative manner.

In the given example, the amplitude A and the phase angle φ are the operating parameters of the generator of the wind turbine.

In a first step 312 of the optimization, a multidimensional space is provided comprising a plurality of discrete operating points of said generator, e.g. as shown in Fig. 4A.

In a next step 314 of the optimization, an objective function for said multidimensional space is provided, e.g. a simplex or simplex-algorithm, in particular a Nelder-Mead method.

In a next step 316, the objective function 314 is applied to the multidimensional space 312 in an iterative manner for determining at least one parameter A, φ of said multidimensional space as a suitable operating parameter A', φ'.

Said suitable operating parameter A', φ' is then selected in a next step 320 and applied to a controller, e.g. for controlling 330 an active rectifier.

Thus, the wind turbine is controlled based on the selected suitable operating parameter A', φ' parameters as operating parameter A", φ".

In a preferred embodiment, the suitable operating parameter A', φ' may also be used to update the multidimensional space, in particular the plurality of parameters Ai, φi.

Fig. 4A shows a multidimensional space 400, in particular as used in the optimization as shown in Fig. 3.

The multidimensional space 400 has multiple discrete points 412 and is in form of a two-dimensional polar coordinate system forming a grid of circular shape with approximately equal sized triangular cells.

Each discrete point 412 comprises a coordinate for the Amplitude Aᵢ and a coordinate for the phase angle φᵢ describing one operating point of said wind turbine, in particular the electric generator of said wind turbine.

By applying an objective function to said multidimensional space 400, a point 412 within said multidimensional space 400 may be sought having suitable parameters.

For determining whether parameters are suitable or not, a predetermined condition may be used, e.g. noise of the generator using a microphone with the hub of said wind turbine.

By using noise as a predetermined condition, the proposed method may be used to lower the noise of the generator and/or the wind turbine.

However, also other predetermined conditions may be used such as rotational speed of the generator, heat within said generator, mechanical disturbances, such as torque ripple, and further more.

Fig. 4B shows a multidimensional space 400 during optimization, in particular as shown in Fig. 3, using a predetermined condition, in particular noise.

The multidimensional space 400 is as shown in Fig. 4A.

In addition, the objective function OF is applied to said multidimensional space 400. This can be illustrated by the triangle 430.

Due to the objective function OF, a suitable parameter A', φ' is sought. This may be illustrated by the triangle 430 moving (arrow, 432).

In the given example, the noise of the generator is chosen as a predetermined condition. The noise of the generator is illustrated by lines d0, d1, d2, d3 each of the same noise.

The objective function will lead the triangle 430 to move into the target area TA referencing to the lowest noise of the generator. Hence, an Amplitude and a phase angle φ with the target area will be determined as a suitable parameter A', φ' leading to low noise of said generator.

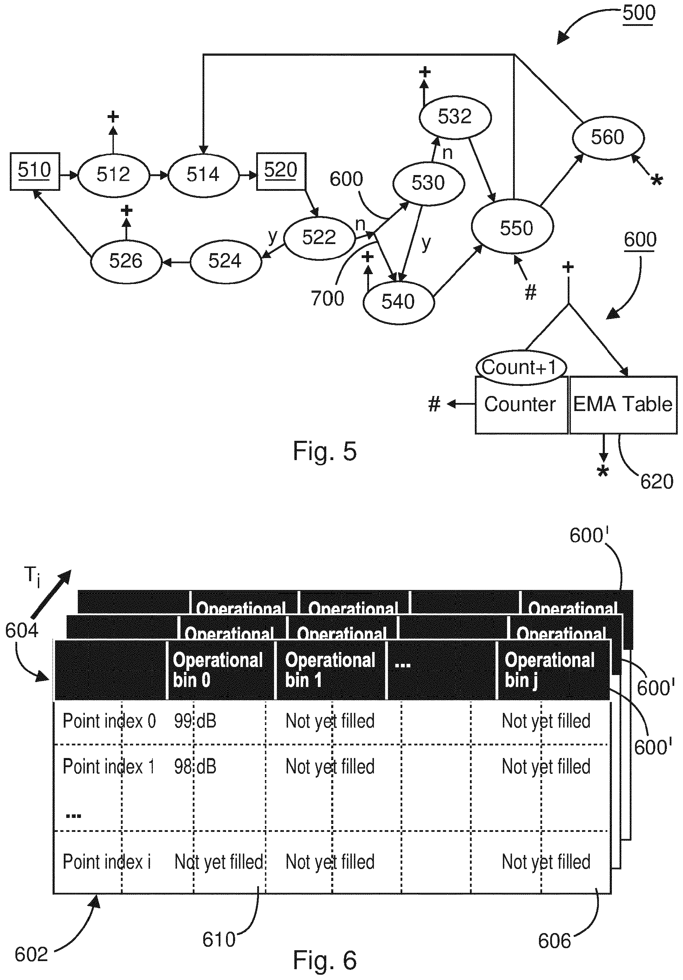

Fig. 5 shows a flow chart 500 of the optimization 310, as shown in Fig. 3, in particular one embodiment of the step of: determining one parameter by applying said objective function to said multidimensional space, in particular in an iterative manner.

In this embodiment, a Nelder-Mead method is used to apply said objective function to said multidimensional space. Also, said Nelder-Mead method comprises a simplex having the shape of a triangle.

Hence, a numerical method is used to determine suitable, in particular optimal, operating parameter for controlling said wind turbine, in particular said electrical generator of said wind turbine.

In a first step 510, said optimization 310 is started.

In a next step 512, all points of the objective function are measured, in particular all three points of the triangle 430, as shown in Fig. 4B.

In a next step 514, a reflection of the worst point(s) of the measured points is performed. In this case, a reflection of the worst point of the triangle is performed according to the Nelder-Mead method.

Said reflection leads to a new triangle 520.

In a next step 522, it is checked whether a reference measurement is needed or not.

If so (y), said triangle is forced to the center point in a next step 524 and said center point is validated by measuring in a further step 526 or several furthers steps, e.g. by measuring five times. The amount of further steps depends on the allowed step size. After setting said center point, said optimization is started again 510.

If not so (n), and depending on the optimization mode, namely fast mode 600 or slow mode 700, new point(s) are measured.

In fast mode, it is checked if/whether said triangle does not move or not, in a first step 530. Said triangle is considered moving, if the last few triangle of the optimization have moved or not. If said last few triangle movements were not the same, only one new point is measured in further step 532. If said last few triangle movements were the same, the triangle is considered not moving and therefore, all points, in particular all three points, were measured in a next step 540.

In slow mode, all points, in particular all three points, were measured in a next step 540.

After measuring new point(s), it is checked weather or not a predetermined criteria is met, e.g. a threshold number of a counter, in a next step 550.

If said predetermined criteria is reached, a suitable operating parameter may be found and be selected as an operating parameter in a next step 560.

If said predetermined criteria is not reached, said reflection of the work points(s) of step 514 is repeated, followed by the same steps as described above and repeated until said predetermined criteria is met.

Therefore, said reflection and checking if said triangle is moving is performed in an iterative manner until said predetermined criteria is met.

Thus, said algorithm also comprises the steps of: measuring all needed points for the objective function. In this case: all three points of the triangle.

During optimization, different measurements are performed leading to new points and said new points may be stored in a look-up table 700. This is indicated by the (+) in the flow chart.

Said look-up table 700 may also comprise a counter 710, which is used if the predetermined criteria is a threshold number. This is indicated by the (#) in the flow chart.

Said look-up table 700 may also comprise a table 720 for an exponential moving average, which may be used to validate weather a parameter is suitable or not. This is indicated by the (*) in the flow chart.

Fig. 6 shows a look-up table 600, which is preferably used within the above or below described optimization.

Said loop-up table may be used to keep count of the measured points, as described above, in particular in Fig. 5.

Said look-up table 600 may comprises multiple tables 600' each having a plurality of columns 602 and rows 604. The multiple tables 600' are used for different temperatures Ti within said generator.

Said columns 602 are set for a first operating parameter and said rows 604 are set for a second operating parameter.

During operation the cells 610 of the look-up table 600 may be filled with measured values, e.g. noise, corresponding to a predetermined criteria, in particular by using the first and second operating parameter.

In one example, the first operating parameter is the amplitude and the second operating parameter is the phase angle, and the corresponding criteria is noise is measured via microphone in the nacelle.

Preferably, the cells 610 of said look-up table are update by using an exponential moving average (EMA).

More preferably, said operating parameters are binned.

### Reference character list

- 100: wind turbine
- 102: tower of said wind turbine
- 104: nacelle of said wind turbine
- 106: aerodynamic rotor of said wind turbine
- 107: hub of said wind turbine
- 108: rotor blade of said wind turbine
- 110: spinner of said wind turbine
- 120: generator, in particular a permanent magnet synchronous generator
- 130: active rectifier of said wind turbine
- 140: inverter of said wind turbine
- 150: wind turbine control unit of said wind turbine
- 152: optimization module
- 200: sensor, in particular accelerometer
- 250: electrical supply grid

- 300: scheme of the proposed method
- 310: run the optimization
- 320: selecting suitable operating parameters
- 330: controlling an active rectifier

- 400: multidimensional space
- 410: grid

- 412: discrete points of said grid
- 414: triangular cells
- 420: parameters
- 430: triangle

- A: amplitude
- φ: phase angle

- d0, d1, ...: lines of noise in dB
- TA: target area
- Ti: temperature
- i_{g1}: generator current of a first phase
- i_{g2}: generator current of a second phase
- i_{g3}: generator current of a third phase

- y: yes
- n: no

## Claims

1. Method (300) for controlling a wind turbine (100), in particular an electric generator (120) of said wind turbine, comprising
- an optimization (310), in particular a mathematical optimization, during which a suitable operating parameter (A, φ) for controlling said wind turbine (100), in particular said electrical generator (120) of said wind turbine (100), is determined, in particular in an iterative manner, wherein the operating parameter (A, φ) being an amplitude (A) and a phase angle (φ), with the steps of:
- providing (312) a multidimensional space comprising a plurality of parameters (Ai, φi);
- providing (314) an objective function (OF) for said multidimensional space, e.g. a simplex has a shape of a triangle or a tetrahedron; and
- determining one parameter (A1, φ1) of said multidimensional space as a suitable operating parameter (A', φ') by applying (500) said objective function to said multidimensional space, in particular in an iterative manner,
and comprising further the steps of:
- selecting (320) a suitable operating parameter (A', φ') as an operating parameter (A", φ") for said wind turbine (100), in particular said electric generator (120) of said wind turbine (100); and
- operating (330) said wind turbine (100), in particular said electric generator (120) of said wind turbine (100), based on said operating parameter (A", φ"), in particular by controlling a converter (130, 140) connected to said generator (120), **characterized in that**
the multidimensional space being a simplex has a shape of a triangle or a tetrahedron and said optimization comprises at least a first and a second mode, and the optimization further comprises the step:
- choosing the first or the second mode depending on a power ramp (dP/dt).

2. Method for controlling a wind turbine according to claim 1, wherein
- said optimization is running while said generator is rotating and/or generating electrical power.

3. Method for controlling a wind turbine according to claim 1 or 2, wherein
- said optimization is a mathematical and/or numerical optimization.

4. Method for controlling a wind turbine according to any of the preceding claims, wherein
- said multidimensional space is provided as a grid, in particular a circular grid, preferably having equal sized cells, e.g. of triangular shape.

5. Method for controlling a wind turbine according to any of the preceding claims, wherein
- said determining is carried out by a direct search method or an Nelder-Mead method.

6. Method for controlling a wind turbine according to any of the preceding claims, wherein
- said operating parameter is a minimum or maximum of said objective function

7. Method for controlling a wind turbine according to any of the preceding claims, wherein
- said suitable operating parameter (A', φ') is not selected as the operating parameter (A", φ") for said wind turbine (100) when said suitable operating parameter would lead to an operating current above a certain threshold.

8. Method for controlling a wind turbine according to any of the preceding claims, wherein
- said optimization used a look-up table to store measure points.

9. Wind turbine comprising an electric generator, which is controlled by a method according to any of claims 1 to 8.

10. Wind turbine according to claim 9, wherein
- said electric generator is a, in particular permanent magnet synchronous, generator with an active rectifier and said active rectifier is designed to control a current of said generator, in particular an amplitude and/or a phase angle of said current.

11. Wind turbine according to claim 9 or 10, further comprising
- a wind turbine control unit (150) having at least one optimization modul (152), preferably with a look-up table for storing measured points.

12. Wind turbine according to claim 11 further comprising
- a sensor placed on a hub of said wind turbine.

13. Wind turbine according to claim 12**,** wherein
- said sensor is designed to detect a vibration or a sound of said wind turbine and/or said electric generator and/or a wind turbine blade.

## Patentansprüche

1. Verfahren (300) zur Steuerung einer Windenergieanlage (100), insbesondere eines elektrischen Generators (120) dieser Windenergieanlage, umfassend
- eine Optimierung (310), insbesondere eine mathematische Optimierung, bei der ein geeigneter Betriebsparameter (A, φ) zur Steuerung der Windenergieanlage (100), insbesondere des elektrischen Generators (120) der Windenergieanlage (100), ermittelt wird, insbesondere auf iterative Weise, wobei der Betriebsparameter (A, φ) eine Amplitude (A) und ein Phasenwinkel (φ) ist, mit den folgenden Schritten:
- Bereitstellen (312) eines mehrdimensionalen Raums, der eine Vielzahl von Parametern (Ai, φi) umfasst;
- Bereitstellen (314) einer Zielfunktion (OF) für den mehrdimensionalen Raum, z. B. eines Simplexes in Form eines Dreiecks oder eines Tetraeders; und
- Bestimmen eines Parameters (A1, φ1) des mehrdimensionalen Raums als geeigneten Betriebsparameter (A', φ') durch Anwenden (500) der Zielfunktion auf den mehrdimensionalen Raum, insbesondere auf iterative Weise,
und ferner die folgenden Schritte umfassend:
- Auswählen (320) eines geeigneten Betriebsparameters (A', φ') als Betriebsparameter (A'', φ") für die Windenergieanlage (100), insbesondere für den elektrischen Generator (120) der Windenergieanlage (100); und
- Betreiben (330) der Windenergieanlage (100), insbesondere des elektrischen Generators (120) der Windenergieanlage (100), auf der Grundlage des Betriebsparameters (A'', φ"), insbesondere durch Ansteuern eines mit dem Generator (120) verbundenen Umrichters (130, 140),
**dadurch gekennzeichnet, dass**
der mehrdimensionale Raum, bei dem es sich um ein Simplex handelt, die Form eines Dreiecks oder eines Tetraeders aufweist und die Optimierung mindestens einen ersten und einen zweiten Modus umfasst, und die Optimierung ferner den folgenden Schritt umfasst:
- Auswahl des ersten oder des zweiten Modus in Abhängigkeit von einer Leistungsrampe (dP/dt).

2. Verfahren zur Steuerung einer Windenergieanlage nach Anspruch 1, wobei
- die Optimierung durchgeführt wird, während sich der Generator dreht und/oder elektrische Leistung erzeugt.

3. Verfahren zur Steuerung einer Windenergieanlage nach Anspruch 1 oder 2, wobei
- die Optimierung eine mathematische und/oder numerische Optimierung ist.

4. Verfahren zur Steuerung einer Windenergieanlage nach einem der vorstehenden Ansprüche, wobei
- der mehrdimensionale Raum als Gitter, insbesondere als kreisförmiges Gitter, bereitgestellt wird, das vorzugsweise gleich große Zellen, z. B. in Dreiecksform, aufweist.

5. Verfahren zur Steuerung einer Windenergieanlage nach einem der vorstehenden Ansprüche, wobei
- die Bestimmung mittels eines Direkt-Suchverfahrens oder eines Nelder-Mead-Verfahrens durchgeführt wird.

6. Verfahren zur Steuerung einer Windenergieanlage gemäß einem der vorstehenden Ansprüche, wobei
- der Betriebsparameter ein Minimum oder Maximum der Zielfunktion ist.

7. Verfahren zur Steuerung einer Windenergieanlage gemäß einem der vorstehenden Ansprüche, wobei
- der geeignete Betriebsparameter (A', φ') nicht als Betriebsparameter (A'', φ") für die Windenergieanlage (100) ausgewählt wird, wenn der geeignete Betriebsparameter zu einem Betriebsstrom oberhalb eines bestimmten Schwellenwerts führen würde.

8. Verfahren zur Steuerung einer Windenergieanlage gemäß einem der vorstehenden Ansprüche, wobei
- die Optimierung eine Nachschlagetabelle zum Speichern von Messpunkten verwendet.

9. Windenergieanlage mit einem elektrischen Generator, der durch ein Verfahren gemäß einem der Ansprüche 1 bis 8 gesteuert wird.

10. Windenergieanlage nach Anspruch 9, wobei
- der elektrische Generator ein, insbesondere ein Permanentmagnet-Synchrongenerator, mit einem aktiven Gleichrichter ist und der aktive Gleichrichter dazu ausgelegt ist, einen Strom des Generators, insbesondere eine Amplitude und/oder einen Phasenwinkel des Stroms, zu steuern.

11. Windenergieanlage nach Anspruch 9 oder 10, ferner umfassend
- eine Windenergieanlagen-Steuereinheit (150) mit mindestens einem Optimierungsmodul (152), vorzugsweise mit einer Nachschlagetabelle zum Speichern von Messpunkten.

12. Windenergieanlage nach Anspruch 11, ferner umfassend
- einen Sensor, der an einer Nabe der Windenergieanlage angeordnet ist.

13. Windenergieanlage gemäß Anspruch 12 , wobei
- der Sensor dazu ausgelegt ist, eine Schwingung oder ein Geräusch der Windenergieanlage und/oder des elektrischen Generators und/oder eines Windenergieanlagenflügels zu erfassen.

## Revendications

1. Procédé (300) de commande d'une éolienne (100), en particulier d'un générateur électrique (120) de ladite éolienne, comprenant
- une optimisation (310), en particulier une optimisation mathématique, au cours de laquelle un paramètre de fonctionnement (A, φ) approprié pour commander ladite éolienne (100), en particulier ledit générateur électrique (120) de ladite éolienne (100), est déterminé, en particulier d'une manière itérative, dans lequel le paramètre de fonctionnement (A, φ) est une amplitude (A) et un angle de phase (φ), avec les étapes de :
- la fourniture (312) d'un espace multidimensionnel comprenant une pluralité de paramètres (Ai, φi) ;
- la fourniture (314) d'une fonction objective (OF) pour ledit espace multidimensionnel, par exemple un simplexe qui a une forme d'un triangle ou d'un tétraèdre ; et
- la détermination d'un paramètre (A1, φ1) dudit espace multidimensionnel en tant que paramètre de fonctionnement (A', φ') approprié en appliquant (500) ladite fonction objective audit espace multidimensionnel, en particulier d'une manière itérative,
et comprenant en outre les étapes de :
- la sélection (320) d'un paramètre de fonctionnement (A', φ') approprié en tant que paramètre de fonctionnement (A", φ") pour ladite éolienne (100), en particulier ledit générateur électrique (120) de ladite éolienne (100) ; et
- le fonctionnement (330) de ladite éolienne (100), en particulier ledit générateur électrique (120) de ladite éolienne (100), sur la base dudit paramètre de fonctionnement (A", φ"), en particulier en commandant un convertisseur (130, 140) connecté audit générateur (120), **caractérisé en ce que**
l'espace multidimensionnel qui est un simplexe a une forme d'un triangle ou d'un tétraèdre et ladite optimisation comprend au moins un premier et un second mode, et l'optimisation comprend en outre l'étape suivante :
- le choix du premier ou du second mode en fonction d'une rampe de puissance (dP/dt).

2. Procédé de commande d'une éolienne selon la revendication 1, dans lequel
- ladite optimisation est en cours d'exécution alors que ledit générateur tourne et/ou génère de l'énergie électrique.

3. Procédé de commande d'une éolienne selon la revendication 1 ou 2, dans lequel
- ladite optimisation est une optimisation mathématique et/ou numérique.

4. Procédé de commande d'une éolienne selon l'une quelconque des revendications précédentes, dans lequel
- ledit espace multidimensionnel est prévu sous forme d'une grille, en particulier d'une grille circulaire, présentant de préférence des cellules de taille égale, par exemple de forme triangulaire.

5. Procédé de commande d'une éolienne selon l'une quelconque des revendications précédentes, dans lequel
- ladite détermination est réalisée par un procédé de recherche directe ou un procédé de Nelder-Mead.

6. Procédé de commande d'une éolienne selon l'une quelconque des revendications précédentes, dans lequel
- ledit paramètre de fonctionnement est un minimum ou un maximum de ladite fonction objectif.

7. Procédé de commande d'une éolienne selon l'une quelconque des revendications précédentes, dans lequel
- ledit paramètre de fonctionnement (A', φ') approprié n'est pas sélectionné comme paramètre de fonctionnement (A", φ") pour ladite éolienne (100) lorsque ledit paramètre de fonctionnement approprié aboutirait à un courant de fonctionnement supérieur à un certain seuil.

8. Procédé de commande d'une éolienne selon l'une quelconque des revendications précédentes, dans lequel
- ladite optimisation a utilisé une table de consultation pour stocker des points de mesure.

9. Éolienne comprenant un générateur électrique, qui est commandée par un procédé selon l'une quelconque des revendications 1 à 8.

10. Éolienne selon la revendication 9, dans laquelle
- ledit générateur électrique est un générateur, en particulier synchrone à aimant permanent, avec un redresseur actif et ledit redresseur actif est conçu pour commander un courant dudit générateur, en particulier une amplitude et/ou un angle de phase dudit courant.

11. Éolienne selon la revendication 9 ou 10, comprenant en outre
- une unité de commande d'éolienne (150) ayant au moins un module d'optimisation (152), de préférence avec une table de consultation pour stocker des points mesurés.

12. Éolienne selon la revendication 11, comprenant en outre
- un capteur placé sur un moyeu de ladite éolienne.

13. Éolienne selon la revendication 12, dans laquelle
- ledit capteur est conçu pour détecter une vibration ou un son de ladite éolienne et/ou dudit générateur électrique et/ou d'une pale d'éolienne.
